(19) **Europäisches Patentamt / European Patent Office / Office européen des brevets**

(11) **EP 4 036 794 A1**

(12) **EUROPEAN PATENT APPLICATION**
published in accordance with Art. 153(4) EPC

(43) Date of publication:
**03.08.2022 Bulletin 2022/31**

(21) Application number: **21821878.2**

(22) Date of filing: **04.06.2021**

(51) International Patent Classification (IPC):
**G06K 9/00** (2022.01)     **G07C 9/00** (2020.01)
**G06Q 10/04** (2012.01)     **G06Q 10/06** (2012.01)

(86) International application number:
**PCT/CN2021/098382**

(87) International publication number:
**WO 2021/249306 (16.12.2021 Gazette 2021/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.06.2020 CN 202010510936**

(71) Applicant: **Shanghai Sensetime Intelligent Technology Co., Ltd.**
**Shanghai 200233 (CN)**

(72) Inventors:
• **YANG, Kunlin**
  **Shanghai 200233 (CN)**
• **LIU, Shinan**
  **Shanghai 200233 (CN)**
• **HOU, Jun**
  **Shanghai 200233 (CN)**
• **YI, Shuai**
  **Shanghai 200233 (CN)**

(74) Representative: **Bandpay & Greuter**
**30, rue Notre-Dame des Victoires**
**75002 Paris (FR)**

(54) **CROWD OVERDENSITY PREDICTION METHOD AND DEVICE**

(57)    The present disclosure provides an overcrowding prediction method and an overcrowding prediction apparatus. The method includes: obtaining a plurality of images of at least one checkpoint of a monitored area; according to the plurality of images of the at least one checkpoint of the monitored area, determining a number of already-accommodated persons in the monitored area and a net inflow rate of persons to the monitored area; and according to the number of already-accommodated persons in the monitored area, a number of accommodatable persons in the monitored area and the net inflow rate of persons to the monitored area, determining an overcrowding time of the monitored area.

S201 — Obtain a plurality of images of at least one checkpoint of a monitored area

S202 — Determine a number of already-accommodated persons in the monitored area and a net inflow rate of persons to the monitored area according to the plurality of images of the at least one checkpoint of the monitored area

S203 — Determine an overcrowding time of the monitored area according to the number of already-accommodated persons in the monitored area, a number of accommodatable persons in the monitored area and the net inflow rate of persons to the monitored area

FIG.2

**Description**

**CROSS REFERENCE TO RELATED APPLICATIONS**

This application claims priority to Chinese Patent Application No. 202010510936.4 entitled "OVERCROWDING PREDICTION METHODS AND APPARATUSES, ELECTRONIC DEVICES AND STORAGE MEDIA" filed on June, 08, 2020, the entire content of which is incorporated herein by reference.

**TECHNICAL FIELD**

The present disclosure relates to the field of computer visions, and in particular to overcrowding prediction methods and overcrowding prediction apparatuses.

**BACKGROUND**

Crowd density detection is to detect whether a number of persons in a closed area reaches a limit by an image recognition technology. When it is determined that the closed area is overcrowded, an official may be noted to limit a flow rate of persons entering the closed area, so as to prevent dangerous events.

**SUMMARY**

According to a first aspect of the present disclosure, there is provided an overcrowding prediction method which is applied to a server. The method includes: obtaining a plurality of images of at least one checkpoint of a monitored area; according to the plurality of images of the at least one checkpoint of the monitored area, determining a number of already-accommodated persons in the monitored area and a net inflow rate of persons to the monitored area; and according to the number of already-accommodated persons in the monitored area, a number of accommodatable persons in the monitored area and the net inflow rate of persons to the monitored area, determining an overcrowding time of the monitored area.

In an implementation, according to the plurality of images of the at least one checkpoint of the monitored area, determining the number of already-accommodated persons in the monitored area, includes: identifying a number of persons entering the monitored area and a number of persons leaving the monitored area from the plurality of images of the at least one checkpoint of the monitored area; according to the number of persons entering the monitored area and the number of persons leaving the monitored area, determining the number of already-accommodated persons in the monitored area.

In an implementation, according to the plurality of images of the at least one checkpoint of the monitored area, determining the net inflow rate of persons to the monitored area, includes: identifying a number of persons entering the monitored area and a number of persons leaving the monitored area within a target time period from the plurality of images of the at least one checkpoint of the monitored area; according to the number of persons entering the monitored area and the number of persons leaving the monitored area within the target time period, determining an inflow rate of persons at the at least one checkpoint and an outflow rate of persons at the at least one checkpoint; and according to the inflow rate of persons at the at least one checkpoint and the outflow rate of persons at the at least one checkpoint, determining the net inflow rate of persons to the monitored area.

In an implementation, according to the plurality of images of the at least one checkpoint of the monitored area, determining the net inflow rate of persons to the monitored area, includes: identifying a number of persons entering the monitored area and a number of persons leaving the monitored area within a target time period from the plurality of images of the at least one checkpoint of the monitored area; according to the number of persons entering the monitored area and the number of persons leaving the monitored area within the target time period, determining a net inflow number of persons to the monitored area; and according to the net inflow number of persons to the monitored area, determining the net inflow rate of persons to the monitored area.

In an implementation, according to the number of already-accommodated persons in the monitored area, the number of accommodatable persons in the monitored area and the net inflow rate of persons to the monitored area, determining the overcrowding time of the monitored area, includes: according to the number of already-accommodated persons in the monitored area and the number of accommodatable persons in the monitored area, determining a number of remaining accommodatable persons in the monitored area; according to the number of remaining accommodatable persons in the monitored area and the net inflow rate of persons to the monitored area, determining the overcrowding time of the monitored area.

In an implementation, before determining the overcrowding time of the monitored area, the method further includes: determining the monitored area is at a risk of overcrowding in response to the net inflow rate of persons to the monitored area is positive.

In an implementation, before determining the overcrowding time of the monitored area, the method further includes: determining the monitored area is not at a risk of overcrowding in response to the net inflow rate of persons to the monitored area is negative.

In an implementation, after determining the overcrowding time of the monitored area, the method further includes: sending the overcrowding time of the monitored area to a terminal device.

In an implementation, if the monitored area includes a plurality of checkpoints, according to the plurality of images of the at least one checkpoint of the monitored area, determining the number of already-accommodated persons in the monitored area, includes: for each of the plurality of checkpoints, from a plurality of images of the checkpoint, identifying a number of persons entering the monitored area via the checkpoint and a number of persons leaving the monitored area via the checkpoint; according to the number of persons entering the monitored area via the checkpoint and the number of persons leaving the monitored area via the checkpoint, determining a net inflow number of persons at the checkpoint; and obtaining the number of already-accommodated persons in the monitored area by adding up the net inflow numbers of persons at all of the checkpoints.

In an implementation, if the monitored area includes a plurality of checkpoints, according to the plurality of images of the at least one checkpoint of the monitored area, determining the number of already-accommodated persons in the monitored area, includes: for each of the plurality of checkpoints, from a plurality of images of the checkpoint, identifying a number of persons entering the monitored area via the checkpoint and a number of persons leaving the monitored area via the checkpoint; obtaining a total number of persons entering the monitored area by adding up the numbers of persons entering the monitored area via all of the checkpoints; obtaining a total number of persons leaving the monitored area by adding up the numbers of persons leaving the monitored area via all of the checkpoints; determining the number of already-accommodated persons in the monitored area by subtracting the total number of persons leaving the monitored area from the total number of persons entering the monitored area.

In an implementation, if the monitored area includes a plurality of checkpoints, according to the plurality of images of the at least one checkpoint of the monitored area, determining the net inflow rate of persons to the monitored area, includes: for each of the plurality of checkpoints, identifying a number of persons entering the monitored area via the checkpoint and a number of persons leaving the monitored area via the checkpoint within a target time period from a plurality of images of the checkpoint; obtaining an inflow rate of persons at the checkpoint by dividing the number of persons entering the monitored area via the checkpoint with a time length of the target time period; and obtaining an outflow rate of persons at the checkpoint by dividing the number of persons leaving the monitored area via the checkpoint with the time length of the target time period; obtaining an inflow rate of persons to the monitored area by adding up the inflow rates of persons at all of the checkpoints; obtaining an outflow rate of persons from the monitored area by adding up the outflow rates of persons at all of the checkpoints; and determining the net inflow rate of persons to the monitored area by subtracting the outflow rate of persons from the monitored area from the inflow rate of persons to the monitored area.

In an implementation, if the monitored area includes a plurality of checkpoints, according to the plurality of images of the at least one checkpoint of the monitored area, determining the net inflow rate of persons to the monitored area, includes: for each of the plurality of checkpoints, identifying a number of persons entering the monitored area via the checkpoint and a number of persons leaving the monitored area via the checkpoint within a target time period from a plurality of images of the checkpoint; obtaining an inflow rate of persons at the checkpoint by dividing the number of persons entering the monitored area via the checkpoint with a time length of the target time period; obtaining an outflow rate of persons at the checkpoint by dividing the number of persons leaving the monitored area via the checkpoint with the time length of the target time period; and obtaining a net inflow rate of persons at the checkpoint by subtracting the outflow rate of persons at the checkpoint from the inflow rate of persons at the checkpoint; and determining the net inflow rate of persons to the monitored area by adding up the net inflow rates of persons at all of the checkpoints.

According to a second aspect of the present disclosure, there is provided an overcrowding prediction apparatus. The apparatus includes: an obtaining module, configured to obtain a plurality of images of at least one checkpoint of a monitored area; a first determining module, configured to, according to the plurality of images of the at least one checkpoint of the monitored area, determine a number of already-accommodated persons in the monitored area and a net inflow rate of persons to the monitored area; a second determining module, configured to, according to the number of already-accommodated persons in the monitored area, a number of accommodatable persons in the monitored area and the net inflow rate of persons to the monitored area, determine an overcrowding time of the monitored area.

In an implementation, the first determining module is configured to: identify a number of persons entering the monitored area and a number of persons leaving the monitored area from the plurality of images of the at least one checkpoint of the monitored area; according to the number of persons entering the monitored area and the number of persons leaving monitored area, determine the number of already-accommodated persons in the monitored area.

In an implementation, the first determining module is configured to: identify a number of persons entering the monitored area and a number of persons leaving the monitored area within a target time period from the plurality of images of the at least one checkpoint of the monitored area; according to the number of persons entering the monitored area and the number of persons leaving the monitored area within the target time period, determine an inflow rate of persons at the at least one checkpoint and an outflow rate of persons at the at least one checkpoint; and according to the inflow rate of persons at the at least one checkpoint and the outflow rate of persons at the at least one checkpoint, determine the net inflow rate of persons to the monitored area.

In an implementation, the second determining module is configured to: according to the number of already-accommodated persons in the monitored area and the number of accommodatable persons in the monitored area, determine a number of remaining accommodatable persons in the monitored area; and according to the number of remaining accommodatable persons in the monitored area and the net inflow rate of persons to the monitored area, determine the overcrowding time of the monitored area.

In an implementation, the apparatus further includes a third determining module, configured to determine the monitored area is at a risk of overcrowding in response to the net inflow rate of persons to the monitored area is positive.

In an implementation, the third determining module is further configured to: determine the monitored area is not at a risk of overcrowding in response to the net inflow rate of persons to the monitored area is negative.

In an implementation, the apparatus further includes a sending module, configured to send the overcrowding time of the monitored area to a terminal device.

According to a third aspect of the present disclosure, there is provided an electronic device including a memory and a processor, where the memory is configured to store instructions executable by the processor; and the processor is configured to perform various optional overcrowding prediction methods of the first aspect of the present disclosure by executing the executable instructions.

According to a fourth aspect of the present disclosure, there is provided a storage medium storing computer programs thereon, where the computer programs implement various optional overcrowding prediction methods of the first aspect when executed by a processor.

According to a fifth aspect of the present disclosure, there is provided a computer program, where when executing the computer program, a processor implements various optional overcrowding prediction methods of the first aspect.

**BRIEF DESCRIPTION OF THE DRAWINGS**

To describe the embodiments of the present disclosure more clearly, the accompanying drawings involved in the embodiments are briefly introduced. Apparently, the accompanying drawings described below are some embodiments of the present disclosure. Those skilled in the art may obtain other drawings based on these drawings without making creative work.

FIG. 1 is a schematic diagram illustrating an application scenario of an overcrowding prediction method according to an embodiment of the present disclosure.
FIG. 2 is a flowchart illustrating an overcrowding prediction method according to an embodiment of the present disclosure.
FIG. 3 is a flowchart illustrating another overcrowding prediction method according to an embodiment of the present disclosure.
FIG. 4 is a flowchart illustrating yet another overcrowding prediction method according to an embodiment of the present disclosure.
FIG. 5 is a structural schematic diagram illustrating an overcrowding prediction apparatus according to an embodiment of the present disclosure.
FIG. 6 is a structural schematic diagram illustrating an electronic device according to an embodiment of the present disclosure.

**DETAILED DESCRIPTION OF THE EMBODIMENTS**

The embodiments of the present disclosure will be fully and clearly described below in combination with the accompanying drawings in the embodiments of the present disclosure. Obviously, the described embodiments are merely some embodiments of the present disclosure rather than all embodiments. All other embodiments obtained by those skilled in the art based on these embodiments of the present disclosure without making creative work shall all fall within the scope of protection of the present disclosure.

Generally, by performing recognition on images of a closed area, a current number of persons inside the closed area can be determined based on a crowd counting method. However, only determining the current number of persons inside the closed area, it may not be enough to predict an overcrowding time of the closed area accurately and thus it is impossible to take some measures in advance to prevent overcrowding.

The embodiments of the present disclosure provide overcrowding prediction methods and overcrowding prediction apparatuses, so as to solve the problem that an overcrowding time of a closed area cannot be accurately predicted. In the present disclosure, based on a number of already-accommodated persons in a monitored area, a number of accommodatable persons in the monitored area and a net inflow rate of persons to the monitored area, an overcrowding time of the monitored area may be determined, thereby improving the prediction accuracy of the overcrowding time/the time at which overcrowding will occur.

An application scenario of the embodiments of the present disclosure will be described below.

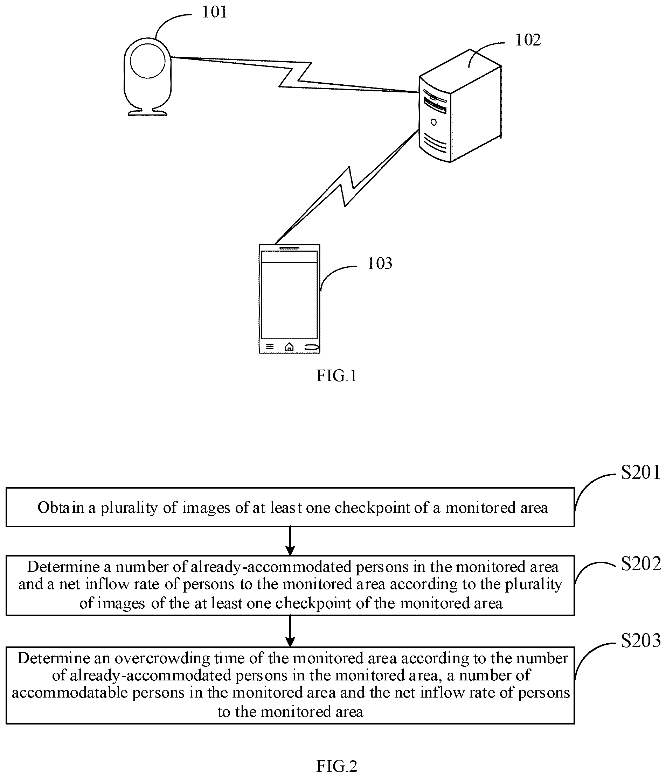

FIG. 1 is a schematic diagram illustrating an application scenario of an overcrowding prediction method according to an embodiment of the present disclosure. As shown in FIG. 1, images of at least one checkpoint of a monitored area may be acquired in real time by at least one image acquisition device 101 and then sent to a server 102. The server 102 determines whether the monitored area is at a risk of overcrowding according to a plurality of images of the at least one checkpoint of the monitored area, and if the monitored area is at the risk of overcrowding, the server 102 may further determine an overcrowding time/a time at which overcrowding will occur. Next, the server 102 may send the overcrowding time to a terminal device 103, such that a manager may take measures to prevent overcrowding based on the overcrowding time displayed on the terminal device 103.

The at least one image acquisition device 101 each may include a camera component such as a camera.

The server 102 may be a server or a server in a cloud service platform. The server 102 may receive images of the at least one checkpoint of the monitored area from the at least one image acquisition device 101 and send an overcrowding time to the terminal device 103.

The terminal device 103 may be a mobile phone, a tablet computer (pad), a computer with wireless transceiving function, a virtual reality (VR) terminal device, an augmented reality (AR) terminal device, a wireless terminal in industrial control, a wireless terminal in self driving, a wireless terminal in a remote medical surgery, a wireless terminal in a smart grid, a wireless terminal in a smart home and the like. In the embodiments of the present disclosure, an apparatus for implementing the function of the terminal may be a terminal or an apparatus supporting the terminal to implement the function, for example, a chip system. The apparatus may be installed in a terminal. In the embodiments of the present disclosure, the chip system may be composed of chips or include a chip and other discrete devices.

The monitored area may be a closed area such as a building, a park and a library.

It is noted that the application scenario of the embodiments of the present disclosure may be the application scenario shown in FIG. 1 but not limited thereto. The embodiments of the present disclosure may be further applied to other scenarios requiring overcrowding prediction.

It may be understood that the above overcrowding prediction method may be implemented by an overcrowding prediction apparatus provided by the embodiments of the present disclosure, and the overcrowding prediction apparatus may be a part or all of a particular device, for example, may be a server or a processor in the server.

With a server installed or integrated with relevant execution codes as an example, the embodiments of the present disclosure are described in details below. The following several embodiments may be mutually combined and those same or similar concepts or processes may no longer be redundantly described in some embodiments.

FIG. 2 is a flowchart illustrating an overcrowding prediction method according to an embodiment of the present disclosure. In the embodiment, the execution subject is a server. As shown in FIG. 2, the method includes steps S201-S203.

S201, a plurality of images of at least one checkpoint of a monitored area are obtained.

The monitored area may be a closed area such as a building, a park and a library. The at least one checkpoint each may be an exit or entrance of the monitored area.

In some embodiments, an image acquisition device may be disposed at the checkpoint of the monitored area to acquire images of the checkpoint of the monitored area in real time and send the images of the checkpoint of the monitored area to a server, such that the server stores the images of the checkpoint of the monitored area in its memory. When it is necessary to predict an overcrowding time/a time at which overcrowding will occur, the server may extract a plurality of images of the checkpoint of the monitored area from the memory.

Furthermore, a number of the at least one checkpoint of the monitored area is not limited in the embodiments of the present disclosure, which may be one or more. When the monitored area includes a plurality of checkpoints, the server needs to obtain a plurality of images of the plurality of checkpoints.

S202, a number of already-accommodated persons in the monitored area and a net inflow rate of persons to the monitored area are determined according to the plurality of images of the at least one checkpoint of the monitored area.

In this step, after obtaining the plurality of images of the at least one checkpoint of the monitored area, the server may determine the number of already-accommodated persons in the monitored area and the net inflow rate of persons to the monitored area according to the plurality of images of the at least one checkpoint of the monitored area.

The net inflow rate of persons may be a difference between an inflow rate of persons and an outflow rate of persons.

The manner in which the number of already-accommodated persons in the monitored area is determined is not limited in the embodiments of the present disclosure. In some embodiments, the server may firstly identify a number of persons entering the monitored area and a number of persons leaving the monitored area from the plurality of images of the at least one checkpoint of the monitored area. Next, the server determines the number of already-accommodated persons in the monitored area according to the number of persons entering the monitored area and the number of persons leaving the monitored area. If the monitored area includes a plurality of checkpoints, the server may determine a net inflow number of persons at each checkpoint according to a number of persons entering the monitored area via each checkpoint and a number of persons leaving the monitored area via each checkpoint, and then obtain the number of already-accommodated persons in the monitored area by adding up the net inflow numbers of persons at all of the checkpoints. Alternatively, the server may obtain a total number of persons entering the monitored area by adding up the numbers of persons entering the monitored area via all of the checkpoints, and obtain a total number of persons leaving the monitored area by adding up the numbers of persons leaving the monitored area via all of the checkpoints. Finally, the server may determine the number of already-accommodated persons in the monitored area by subtracting the total number of persons leaving the monitored area from the total number of persons entering the monitored area.

It is noted that the manner in which the number of persons entering the monitored area and the number of persons leaving the monitored area are determined is not limited in the embodiments of the present disclosure, and therefore any available image recognition technology may be employed. In some implementations, the number of persons entering the monitored area and the number of persons leaving the monitored area may be determined by a cross-line counting method.

Furthermore, the manner in which the net inflow rate of persons to the monitored area is determined is not limited in the embodiments of the present disclosure. In some embodiments, the server may firstly identify a number of persons entering the monitored area and a number of persons leaving the monitored area within a target time period from a plurality of images of the at least one checkpoint of the monitored area, and then determine an inflow rate of persons at the at least one checkpoint and an outflow rate of persons at the at least one checkpoint according to the number of persons entering the monitored area and the number of persons leaving the monitored area within the target time period. Next, the server determines the net inflow rate of persons to the monitored area according to the inflow rate of persons at the at least one checkpoint and the outflow rate of persons at the at least one checkpoint.

In some embodiments, the server may firstly identify a number of persons entering the monitored area and a number of persons leaving the monitored area within a target time period from a plurality of images of the at least one checkpoint of the monitored area, and then determine a net inflow number of persons to the monitored area according to the number of persons entering the monitored area and the number of persons leaving the monitored area within the target time period. Next, the server determines the net inflow rate of persons to the monitored area according to the net inflow number of persons to the monitored area.

In the present disclosure, a time length of the target time period is not limited. Therefore, the target time period may be a time period with a time point at which an overcrowding time is detected (referred to as detection time point) as ending time point. Illustratively, the target time period may be 60 seconds prior to the detection time point, or 120 seconds prior to the detection time point.

S203, an overcrowding time of the monitored area is determined according to the number of already-accommodated persons in the monitored area, a number of accommodatable persons in the monitored area and the net inflow rate of persons to the monitored area.

In this step, after determining the number of already-accommodated persons in the monitored area and the net inflow rate of persons to the monitored area, the server may determine the overcrowding time of the monitored area according to the number of already-accommodated persons in the monitored area, the number of accommodatable persons in the monitored area and the net inflow rate of persons to the monitored area.

The number of accommodatable persons in the monitored area may be preset, and the number of accommodatable persons in the monitored area is not limited in the present disclosure. Illustratively, the number of accommodatable persons may be predicted based on an occupation land area of the monitored area, a large number of accommodatable persons may be set for a monitored area with a large occupation land area and a small number of accommodatable persons may be set for a monitored area with a small occupation land area.

In some embodiments, the server may determine a number of remaining accommodatable persons in the monitored area according to the number of already-accommodated persons in the monitored area and the number of accommodatable persons in the monitored area. Next, the server may determine the overcrowding time of the monitored area according to the number of remaining accommodatable persons in the monitored area and the net inflow rate of persons to the monitored area.

In an implementation, before determining the overcrowding time of the monitored area, the server may further detect the net inflow rate of persons to the monitored area. If the net inflow rate of persons to the monitored area is negative, it indicates that more people leave the monitored area than enter the monitored area. In this case, the server may determine that the monitored area is not at the risk of overcrowding. As a result, the server no longer needs to determine the overcrowding time. If the net inflow rate of persons to the monitored area is positive, it indicates that more people enter the monitored area than leave the monitored area. In this case, the server determines that the monitored area is at the risk of overcrowding, and thus needs to determine the overcrowding time.

Further, in some embodiments, if the number of already-accommodated persons in the monitored area is greater than the number of accommodatable persons in the monitored area, the server may determine the monitored area is already overcrowded.

In an implementation, after determining the overcrowding time of the monitored area, the server may send the overcrowding time of the monitored area to a terminal device, such that the terminal device displays the overcrowding time and sends an overcrowding prompt to a manager. In this way, the manager may take measures in time to prevent overcrowding.

In the overcrowding prediction method provided by the embodiments of the present disclosure, firstly, a plurality of images of at least one checkpoint of a monitored area are obtained; and then a number of already-accommodated persons in the monitored area and a net inflow rate of persons to the monitored area are determined according to the plurality of images of the at least one checkpoint of the monitored area; and finally, a overcrowding time of the monitored area is determined according to the number of already-accommodated persons in the monitored area, a number of accommodatable persons in the monitored area and the net inflow rate of persons to the monitored area. In the present disclosure, the overcrowding time/the time at which overcrowding will occur can be predicted based on the number of already-accommodated persons in the monitored area, the number of accommodatable persons in the monitored area and the net inflow rate of persons to the monitored area, thereby improving the prediction accuracy of the time at which overcrowding will occur.

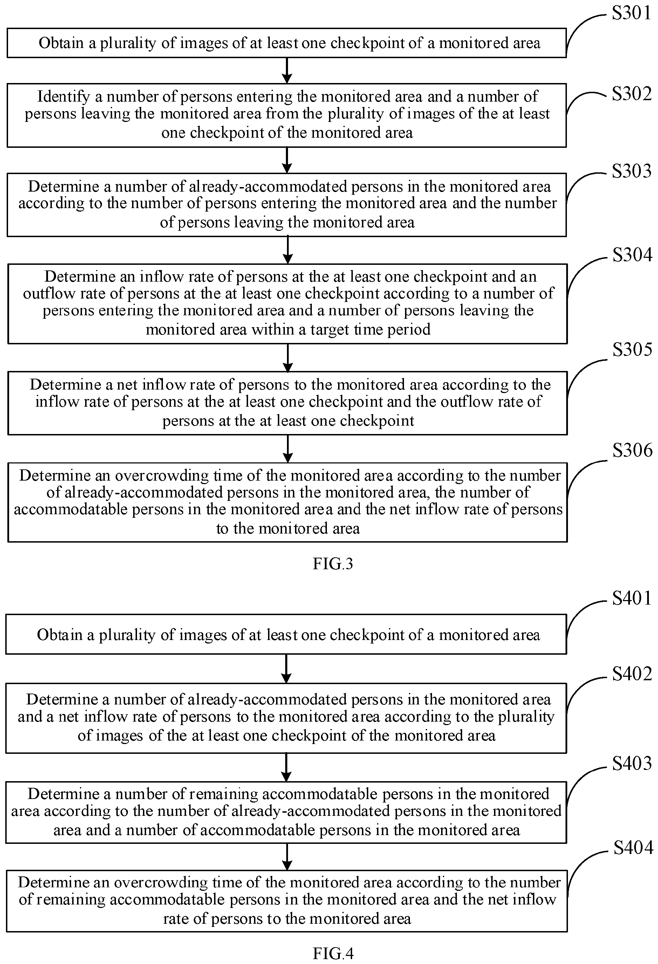

Based on the above embodiments, descriptions are made below as to how to determine the number of already-accommodated persons in the monitored area and the net inflow rate of persons to the monitored area. FIG. 3 is a flowchart illustrating another overcrowding prediction method according to an embodiment of the present disclosure. In the embodiment, the execution subject is a server. As shown in FIG. 3, the method includes steps S301-S306.

S301, a plurality of images of at least one checkpoint of a monitored area are obtained.

Reference may be made to the step S201 shown in FIG. 2 for understanding the step S301 and thus relevant contents will not be repeated herein.

S302, a number of persons entering the monitored area and a number of persons leaving the monitored area are identified from the plurality of images of the at least one checkpoint of the monitored area.

In the embodiments of the present disclosure, no limitation is made to how to identify the number of persons entering the monitored area and the number of persons leaving the monitored area from the plurality of images of the at least one checkpoint of the monitored area. Thus, any available image recognition technology may be employed. In some embodiments, the number of persons entering the monitored area and the number of persons leaving the monitored area may be determined based on a cross-line counting method.

It is noted that the number of persons entering the monitored area and the number of persons leaving the monitored area may be counted from a preset time point until a time point at which the overcrowding time is detected. In the embodiments of the present disclosure, no limitation is made to the preset time point. Illustratively, the preset time point may be 3 o'clock PM each day.

S303, a number of already-accommodated persons in the monitored area is determined according to the number of persons entering the monitored area and the number of persons leaving the monitored area.

Illustratively, the server may obtain the number of already-accommodated persons in the monitored area by subtracting the number of persons leaving the monitored area from the number of persons entering the monitored area.

In some embodiments, if the monitored area includes a plurality of checkpoints, the server may, for each of the plurality of checkpoints, firstly identify a number of persons entering the monitored area via the checkpoint and a number of persons leaving the monitored area via the checkpoint from a plurality of images of the checkpoint. Next, the server may determine a net inflow number of persons at the checkpoint by subtracting the number of persons leaving the monitored area via the checkpoint from the number of persons entering the monitored area via the checkpoint. Finally, the server may obtain the number of already-accommodated persons in the monitored area by adding up the net inflow numbers of persons at all of the checkpoints.

In some other embodiments, if the monitored area includes a plurality of checkpoints, the server may, for each of the plurality of checkpoints, firstly identify a number of persons entering the monitored area via the checkpoint and a number of persons leaving the monitored area via the checkpoint from a plurality of images of the checkpoint. Next, the server may obtain a total number of persons entering the monitored area by adding up the numbers of persons entering the monitored area via all of the checkpoints; and obtain a total number of persons leaving the monitored area by adding up the numbers of persons leaving the monitored area via all of the checkpoints. Finally, the server may determine the number of already-accommodated persons in the monitored area by subtracting the total number of persons leaving the monitored area from the total number of persons entering the monitored area.

S304, an inflow rate of persons at the at least one checkpoint and an outflow rate of persons at the at least one checkpoint are determined according to a number of persons entering the monitored area and a number of persons leaving the monitored area within a target time period.

In the present disclosure, a time length of the target time period is not limited. Therefore, the target time period may be a time period with the detection time point as ending time point. Illustratively, the target time period may be 60 seconds prior to the detection time point, or 120 seconds prior to the detection time point.

Illustratively, if the monitored area includes a plurality of checkpoints, for each of the plurality of checkpoints, the server may identify a number of persons entering the monitored area via the checkpoint and a number of persons leaving the monitored area via the checkpoint within a target time period from a plurality of images of the checkpoint. The server may obtain an inflow rate of persons at the checkpoint by dividing the number of persons entering the monitored area via the checkpoint with a time length of the target time period. And the server may obtain an outflow rate of persons at the checkpoint by dividing the number of persons leaving the monitored area via the checkpoint with the time length of the target time period.

S305, a net inflow rate of persons to the monitored area is determined according to the inflow rate of persons at the at least one checkpoint and the outflow rate of persons at the at least one checkpoint.

In this step, after determining the inflow rate of persons at the at least one checkpoint and the outflow rate of persons at the at least one checkpoint, the server may determine the net inflow rate of persons to the monitored area according to the inflow rate of persons at the at least one checkpoint and the outflow rate of persons at the at least one checkpoint.

In some embodiments, if the monitored area includes a plurality of checkpoints, the server may obtain an inflow rate of persons to the monitored area by adding up the inflow rates of persons at all of the checkpoints, and obtain an outflow rate of persons from the monitored area by adding up the outflow rates of persons at all of the checkpoints. Next, the server may determine the net inflow rate of persons to the monitored area by subtracting the outflow rate of persons from the monitored area from the inflow rate of persons to the monitored area.

In some other embodiments, if the monitored area includes a plurality of checkpoints, for each of the plurality of checkpoints, the server may obtain a net inflow rate of persons at the checkpoint by subtracting an outflow rate of persons at the checkpoint from an inflow rate of persons at the checkpoint. Next, the server may determine the net inflow rate of persons to the monitored area by adding up the net inflow rates of persons at all of the checkpoints.

S306, an overcrowding time of the monitored area is determined according to the number of already-accommodated persons in the monitored area, the number of accommodatable persons in the monitored area and the net inflow rate of persons to the monitored area.

Reference may be made to the step S203 shown in FIG. 2 for understanding the step S306 and thus relevant contents will not be repeated herein.

Based on the above embodiments, descriptions are made below to how to determine the overcrowding time of the monitored area. FIG. 4 is a flowchart illustrating yet another overcrowding prediction method according to an embodiment of the present disclosure. In the embodiment, the execution subject is a server. As shown in FIG. 4, the method includes steps S401-S404.

S401, a plurality of images of at least one checkpoint of a monitored area are obtained.

S402, a number of already-accommodated persons in the monitored area and a net inflow rate of persons to the monitored area are determined according to the plurality of images of the at least one checkpoint of the monitored area.

Reference may be made to steps S201-S202 shown in FIG. 2 for understanding the steps S401-S402 and thus relevant contents will not be repeated herein.

S403, a number of remaining accommodatable persons in the monitored area is determined according to the number of already-accommodated persons in the monitored area and a number of accommodatable persons in the monitored area.

Illustratively, the server may obtain the number of remaining accommodatable persons in the monitored area by subtracting the number of already-accommodated persons $Cnt\_cur$ in the monitored area from the number of accommodatable persons $Cnt\_thresh$ in the monitored area.

S404, an overcrowding time of the monitored area is determined according to the number of remaining accommodatable persons in the monitored area and the net inflow rate of persons to the monitored area.

Illustratively, the server may input the number of remaining accommodatable persons in the monitored area and the net inflow rate of persons to the monitored area into an algorithm model shown in the formula (1) to determine the overcrowding time of the monitored area. The formula (1) is expressed as follows:

$$\mathrm{T}=(Cnt\_thresh - Cnt\_cur)/(V_{in} - V_{out}) \quad (1)$$

where T represents time it will take to become overcrowded, $Cnt\_thresh$ represents a number of accommodatable persons in the monitored area, $Cnt\_cur$ represents a number of already-accommodated persons in the monitored area, $V_{in}$ is an inflow rate of persons to the monitored area, and $V_{out}$ is an outflow rate of persons from the monitored area.

In the overcrowding prediction method provided by the embodiments of the present disclosure, a plurality of images of at least one checkpoint of the monitored area are firstly obtained. Next, a number of already-accommodated persons in the monitored area and a net inflow rate of persons to the monitored area are determined according to the plurality of images of the at least one checkpoint of the monitored area. Next, an overcrowding time of the monitored area is determined according to the number of already-accommodated persons in the monitored area, the number of accommodatable persons in the monitored area and the net inflow rate of persons to the monitored area. Finally, the overcrowding time of the monitored area is sent to a terminal device. In the present disclosure, the overcrowding time can be predicted based on the number of already-accommodated persons in the monitored area, the number of accommodatable persons in the monitored area and the net inflow rate of persons to the monitored area, thereby improving the prediction accuracy of the overcrowding time.

Those of ordinary skill in the art may understand that part or all of the steps for implementing the above method embodiments may be completed through hardware relating to instructions of a program. The program may be stored in a computer readable storage medium. The program may be executed to perform the steps including the above method embodiments, whereas the storage medium includes read only memory (ROM), random access memory (RAM), magnetic diskette, or compact disk and the like which may store program codes.

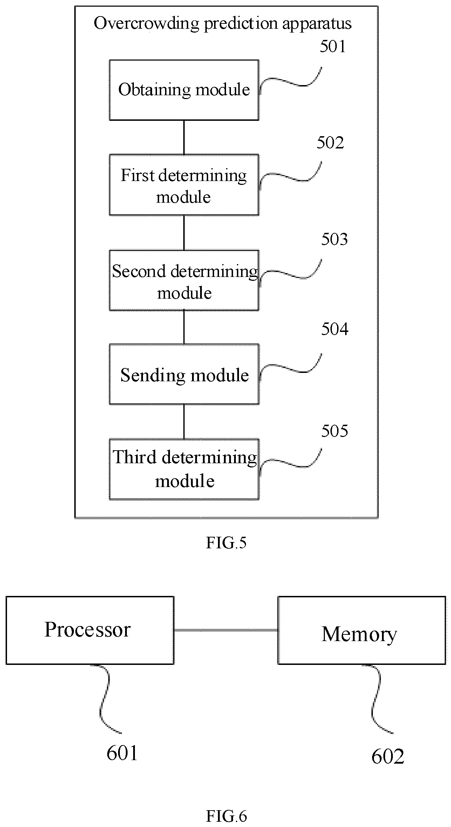

FIG. 5 is a structural schematic diagram illustrating an overcrowding prediction apparatus according to an embodiment of the present disclosure. The overcrowding prediction apparatus may be implemented by software, hardware or a combination of both to perform the overcrowding prediction method of the above embodiments. As shown in FIG. 5, the overcrowding prediction apparatus includes an obtaining module 501, configured to obtain a plurality of images of at least one checkpoint of a monitored area; a first determining module 502, configured to, according to the plurality of images of the at least one checkpoint of the monitored area, determine a number of already-accommodated persons in the monitored area and a net inflow rate of persons to the monitored area; a second determining module 503, configured to, according to the number of already-accommodated persons in the monitored area, a number of accommodatable persons in the monitored area and the net inflow rate of persons to the monitored area, determine an overcrowding time of the monitored area.

In an implementation, the first determining module 502 is configured to identify a number of persons entering the monitored area and a number of persons leaving the monitored area from the plurality of images of the at least one checkpoint of the monitored area; determine the number of already-accommodated persons in the monitored area according to the number of persons entering the monitored area and the number of persons leaving the monitored area.

In an implementation, the first determining module 502 is configured to identify a number of persons entering the monitored area and a number of persons leaving the monitored area within a target time period from the plurality of images of the at least one checkpoint of the monitored area; determine an inflow rate of persons at the at least one checkpoint and an outflow rate of persons at the at least one checkpoint according to the number of persons entering the monitored area and the number of persons leaving the monitored area within the target time period; and determine the net inflow rate of persons to the monitored area according to the inflow rate of persons at the at least one checkpoint and the outflow rate of persons at the at least one checkpoint.

In an implementation, the first determining module 502 is configured to identify a number of persons entering the monitored area and a number of persons leaving the monitored area within a target time period from the plurality of images of the at least one checkpoint of the monitored area; determine a net inflow number of persons to the monitored area according to the number of persons entering the monitored area and the number of persons leaving the monitored area within the target time period; and determine the net inflow rate of persons to the monitored area according to the net inflow number of persons to the monitored area.

In an implementation, the second determining module 503 is configured to determine a number of remaining accommodatable persons in the monitored area according to the number of already-accommodated persons in the monitored area and the number of accommodatable persons in the monitored area; determine the overcrowding time of the monitored area according to the number of remaining accommodatable persons in the monitored area and the net inflow rate of persons to the monitored area.

In an implementation, the apparatus further includes a third determining module 505, configured to determine the monitored area is at a risk of overcrowding in response to the net inflow rate of persons to the monitored area is positive.

In an implementation, the third determining module 505 is further configured to determine the monitored area is not at a risk of overcrowding in response to the net inflow rate of persons to the monitored area is negative.

In an implementation, the apparatus further includes a sending module 504, configured to send the overcrowding time of the monitored area to a terminal device.

In an implementation, if the monitored area includes a plurality of checkpoints, the first determining module 502 is configured to, for each of the plurality of checkpoints, identify a number of persons entering the monitored area via the checkpoint and a number of persons leaving the monitored area via the checkpoint from a plurality of images of the checkpoint; determine a net inflow number of persons at the checkpoint according to the number of persons entering the monitored area via the checkpoint and the number of persons leaving the monitored area via the checkpoint; and obtain the number of already-accommodated persons in the monitored area by adding up the inflow numbers of persons at all of the checkpoints.

In an implementation, if the monitored area includes a plurality of checkpoints, the first determining module 502 is configured to, for each of the plurality of checkpoints, identify a number of persons entering the monitored area via the checkpoint and a number of persons leaving the monitored area via the checkpoint from a plurality of images of the checkpoint; obtain a total number of persons entering the monitored area by adding up the numbers of persons entering the monitored area via all of the checkpoints; obtain a total number of persons leaving the monitored area by adding up the numbers of persons leaving the monitored area via all of the checkpoints; determine the number of already-accommodated persons in the monitored area by subtracting the total number of persons leaving the monitored area from the total number of persons entering the monitored area.

In an implementation, if the monitored area includes a plurality of checkpoints, the first determining module 502 is configured to, for each of the plurality of checkpoints, identify a number of persons entering the monitored area via the checkpoint and a number of persons leaving the monitored area via the checkpoint within a target time period from a plurality of images of the checkpoint; obtain an inflow rate of persons at the checkpoint by dividing the number of persons entering the monitored area via the checkpoint with a time length of the target time period; and obtain an outflow rate of persons at the checkpoint by dividing the number of persons leaving the monitored area via the checkpoint with the time length of the target time period; obtain an inflow rate of persons to the monitored area by adding up the inflow rates of persons at all of the checkpoints; obtain an outflow rate of persons from the monitored area by adding up the outflow rates of persons at all of the checkpoints; and determine the net inflow rate of persons to the monitored area by subtracting the outflow rate of persons from the monitored area from the inflow rate of persons to the monitored area.

In an implementation, if the monitored area includes a plurality of checkpoints, the first determining module 502 is configured to, for each of the plurality of checkpoints, identify a number of persons entering the monitored area via the checkpoint and a number of persons leaving the monitored area via the checkpoint within a target time period from a plurality of images of the checkpoint; obtain an inflow rate of persons at the checkpoint by dividing the number of persons entering the monitored area via the checkpoint with a time length of the target time period; obtain an outflow rate of persons at the checkpoint by dividing the number of persons leaving the monitored area via the checkpoint with the time length of the target time period; and obtain a net inflow rate of persons at the checkpoint by subtracting the outflow rate of persons at the checkpoint from the inflow rate of persons at the checkpoint; and determine the net inflow rate of persons to the monitored area by adding up the net inflow rates of persons at all of the checkpoints.

The overcrowding prediction apparatus provided by the embodiments of the present disclosure may perform the overcrowding prediction method of the above method embodiments, and due to similar implementation principle and technical effects, no redundant descriptions will be made herein.

FIG. 6 is a structural schematic diagram illustrating an electronic device according to an embodiment of the present disclosure. As shown in FIG. 6, the electronic device includes at least one processor 601 and a memory 602. In FIG. 6, an electronic device including one processor is taken as an example.

The memory 602 is configured to store programs. Specifically, the programs include program codes and the program codes include computer operation instructions.

The memory 602 may include high speed random access memory (RAM) or non-volatile memory, for example, at least one magnetic disk memory.

The at least one processor 601 each is configured to execute the computer executable instructions in the memory 602 to implement the overcrowding prediction method as above. The processor 601 may be a Central Processing Unit (CPU), or an Application Specific Integrated Circuit (ASIC), or configured as one or more integrated circuits for implementing the embodiments of the present disclosure.

Optionally, in a specific implementation, if the communication interface, the memory 602 and the processor 601 are implemented independently, the communication interface, the memory 602 and the processor 601 may be interconnected through a bus to complete mutual communications. The bus may be a bus of Industry Standard Architecture (ISA), a bus of Peripheral Component (PCI), or a bus of Extended Industry Standard Architecture (EISA) or the like. The bus may include address bus, data bus, control bus and the like, but does not mean only one bus or one type of bus.

Optionally, in a specific implementation, if the communication interface, the memory 602 and the processor 601 are implemented by integrating in one chip, the communication interface, the memory 602 and the processor 601 may complete communication via an interval interface.

One or more embodiments of the present disclosure provide an overcrowding prediction system including an image acquisition device, a server and a terminal device. The image acquisition device is configured to acquire images of at least one checkpoint of a monitored area, the server is configured to determine an overcrowding time and send it to the terminal device, and the terminal device is configured to receive and display the overcrowding time.

One or more embodiments of the present disclosure further provide a chip including a processor and an interface.

The interface is configured to input and output data or instructions processed by the processor. The processor is configured to perform the method provided in the above embodiments. The chip may be applied to an overcrowding prediction apparatus.

The present disclosure further provides a computer readable storage medium. The computer readable storage medium includes USB disk, mobile hard disk, Read-Only Memory (ROM), Random Access Memory (RAM), magnetic disk or compact disk or the like which stores program codes. Specifically, the computer readable storage medium stores program information used in the above overcrowding prediction methods.

One or more embodiments of the present disclosure further provide a program. The program implements the overcrowding prediction methods provided by the above method embodiments when executed by a processor.

One or more embodiments of the present disclosure further provide a program product, for example, a computer readable storage medium. The program product stores instructions. A computer may perform the overcrowding prediction methods provided by the above method embodiments when the instructions run on the computer.

The above embodiments may be implemented wholly or partially by software, hardware, firmware or any combination thereof. When software is employed, the embodiments may be implemented partially or wholly in the form of computer program product. The computer program product includes one or more computer instructions. The computer program instructions are loaded and executed on a computer, the flows or functions according to the embodiments of the present disclosure are generated partially or wholly. The computer may be a general computer, a dedicated computer, a computer network, or other programmable apparatus. The computer instructions may be stored in the computer readable storage medium or transmitted from one computer readable storage medium to another computer readable storage medium, for example, the computer instructions may be transmitted from one website, computer, server or data center to another website, computer, server or data center in a wired (for example, coaxial cable, optical fiber, DSL) or wireless (for example, infrared, wireless, microwave and the like) manner. The computer readable storage medium may be any available medium accessible by a computer or a data storage device such as a server and a data center including one or more available mediums. The available medium may be magnetic medium (for example, floppy disk, hard disk and magnetic tape), optical medium (for example, DVD), or semiconductor medium (for example, Solid State Disk (SSD)) or the like.

Finally, it should be noted that the above embodiments are merely specific implementations which are used to describe the technical solutions of the present disclosure rather than limit the present disclosure. Although detailed descriptions are made to the present disclosure by referring to the preceding embodiments, those skilled in the art should understand that any person of this prior art may still make modifications to the technical solutions recorded in the above embodiments or make equivalent substitutions to part or all of technical features therein. Such modifications or substitutions will not cause the corresponding technical solutions to depart from the scope of the technical solutions of the embodiments of the present disclosure.

**Claims**

1.   An overcrowding prediction method, being applied to a server and comprising:

obtaining a plurality of images of at least one checkpoint of a monitored area;
according to the plurality of images of the at least one checkpoint of the monitored area, determining a number of already-accommodated persons in the monitored area and a net inflow rate of persons to the monitored area; and
according to the number of already-accommodated persons in the monitored area, a number of accommodatable persons in the monitored area and the net inflow rate of persons to the monitored area, determining an overcrowding time of the monitored area.

2.   The method of claim 1, wherein according to the plurality of images of the at least one checkpoint of the monitored area, determining the number of already-accommodated persons in the monitored area, comprises:

identifying, from the plurality of images of the at least one checkpoint of the monitored area, a number of persons entering the monitored area and a number of persons leaving the monitored area;
according to the number of persons entering the monitored area and the number of persons leaving the monitored area, determining the number of already-accommodated persons in the monitored area.

3.   The method of claim 1, wherein according to the plurality of images of the at least one checkpoint of the monitored area, determining the net inflow rate of persons to the monitored area, comprises:

identifying, from the plurality of images of the at least one checkpoint of the monitored area, a number of persons entering the monitored area and a number of persons leaving the monitored area within a target time period;

according to the number of persons entering the monitored area and the number of persons leaving the monitored area within the target time period, determining an inflow rate of persons at the at least one checkpoint and an outflow rate of persons at the at least one checkpoint; and

according to the inflow rate of persons at the at least one checkpoint and the outflow rate of persons at the at least one checkpoint, determining the net inflow rate of persons to the monitored area.

4. The method of claim 1, wherein according to the plurality of images of the at least one checkpoint of the monitored area, determining the net inflow rate of persons to the monitored area, comprises:

identifying, from the plurality of images of the at least one checkpoint of the monitored area, a number of persons entering the monitored area and a number of persons leaving the monitored area within a target time period;

according to the number of persons entering the monitored area and the number of persons leaving the monitored area within the target time period, determining a net inflow number of persons to the monitored area; and

according to the net inflow number of persons to the monitored area, determining the net inflow rate of persons to the monitored area.

5. The method of any one of claims 1 to 4, wherein according to the number of already-accommodated persons in the monitored area, the number of accommodatable persons in the monitored area and the net inflow rate of persons to the monitored area, determining the overcrowding time of the monitored area, comprises:

according to the number of already-accommodated persons in the monitored area and the number of accommodatable persons in the monitored area, determining a number of remaining accommodatable persons in the monitored area; and

according to the number of remaining accommodatable persons in the monitored area and the net inflow rate of persons to the monitored area, determining the overcrowding time of the monitored area.

6. The method of claim 1, wherein before determining the overcrowding time of the monitored area, the method further comprises:
determining the monitored area is at a risk of overcrowding in response to the net inflow rate of persons to the monitored area is positive.

7. The method of claim 1, wherein before determining the overcrowding time of the monitored area, the method further comprises:
determining the monitored area is not at a risk of overcrowding in response to the net inflow rate of persons to the monitored area is negative.

8. The method of claim 1, wherein after determining the overcrowding time of the monitored area, the method further comprises:
sending the overcrowding time of the monitored area to a terminal device.

9. The method of claim 1, wherein if the monitored area comprises a plurality of checkpoints, according to the plurality of images of the at least one checkpoint of the monitored area, determining the number of already-accommodated persons in the monitored area, comprises:

for each of the plurality of checkpoints:

identifying, from a plurality of images of the checkpoint, a number of persons entering the monitored area via the checkpoint and a number of persons leaving the monitored area via the checkpoint;

according to the number of persons entering the monitored area via the checkpoint and the number of persons leaving the monitored area via the checkpoint, determining a net inflow number of persons at the checkpoint; and

obtaining the number of already-accommodated persons in the monitored area by adding up the net inflow numbers of persons at all of the checkpoints.

10. The method of claim 1, wherein if the monitored area comprises a plurality of checkpoints, according to the plurality of images of the at least one checkpoint of the monitored area, determining the number of already-accommodated persons in the monitored area, comprises:

> for each of the plurality of checkpoints, identifying, from a plurality of images of the checkpoint, a number of persons entering the monitored area via the checkpoint and a number of persons leaving the monitored area via the checkpoint;
> obtaining a total number of persons entering the monitored area by adding up the numbers of persons entering the monitored area via all of the checkpoints;
> obtaining a total number of persons leaving the monitored area by adding up the numbers of persons leaving the monitored area via all of the checkpoints; and
> determining the number of already-accommodated persons in the monitored area by subtracting the total number of persons leaving the monitored area from the total number of persons entering the monitored area.

11. The method of claim 1, wherein if the monitored area comprises a plurality of checkpoints, according to the plurality of images of the at least one checkpoint of the monitored area, determining the net inflow rate of persons to the monitored area, comprises:

> for each of the plurality of checkpoints:

>> identifying, from a plurality of images of the checkpoint, a number of persons entering the monitored area via the checkpoint and a number of persons leaving the monitored area via the checkpoint within a target time period;
>> obtaining an inflow rate of persons at the checkpoint by dividing the number of persons entering the monitored area via the checkpoint with a time length of the target time period; and
>> obtaining an outflow rate of persons at the checkpoint by dividing the number of persons leaving the monitored area via the checkpoint with the time length of the target time period;

> obtaining an inflow rate of persons to the monitored area by adding up the inflow rates of persons at all of the checkpoints;
> obtaining an outflow rate of persons from the monitored area by adding up the outflow rates of persons at all of the checkpoints; and
> determining the net inflow rate of persons to the monitored area by subtracting the outflow rate of persons from the monitored area from the inflow rate of persons to the monitored area.

12. The method of claim 1, wherein if the monitored area comprises a plurality of checkpoints, according to the plurality of images of the at least one checkpoint of the monitored area, determining the net inflow rate of persons to the monitored area, comprises:

> for each of the plurality of checkpoints:

>> identifying, from a plurality of images of the checkpoint, a number of persons entering the monitored area via the checkpoint and a number of persons leaving the monitored area via the checkpoint within a target time period;
>> obtaining an inflow rate of persons at the checkpoint by dividing the number of persons entering the monitored area via the checkpoint with a time length of the target time period;
>> obtaining an outflow rate of persons at the checkpoint by dividing the number of persons leaving the monitored area via the checkpoint with the time length of the target time period; and
>> obtaining a net inflow rate of persons at the checkpoint by subtracting the outflow rate of persons at the checkpoint from the inflow rate of persons at the checkpoint; and

> determining the net inflow rate of persons to the monitored area by adding up the net inflow rates of persons at all of the checkpoints.

13. An overcrowding prediction apparatus, comprising:

> an obtaining module, configured to obtain a plurality of images of at least one checkpoint of a monitored area;
> a first determining module, configured to, according to the plurality of images of the at least one checkpoint of the monitored area, determine a number of already-accommodated persons in the monitored area and a net inflow rate of persons to the monitored area; and

a second determining module, configured to, according to the number of already-accommodated persons in the monitored area, a number of accommodatable persons in the monitored area and the net inflow rate of persons to the monitored area, determine an overcrowding time of the monitored area.

14. An electronic device comprising a memory and a processor, wherein the memory is configured to store instructions executable by the processor; and the processor is configured to perform the method of any one of claims 1-12 by executing the executable instructions.

15. A storage medium storing computer programs thereon, wherein the programs implement the method of any one of claims 1-12 when executed by a processor.

16. A computer program, wherein a processor implements the method of any one of claims 1-12 when executing the computer program.

FIG.1

Obtain a plurality of images of at least one checkpoint of a monitored area — S201

Determine a number of already-accommodated persons in the monitored area and a net inflow rate of persons to the monitored area according to the plurality of images of the at least one checkpoint of the monitored area — S202

Determine an overcrowding time of the monitored area according to the number of already-accommodated persons in the monitored area, a number of accommodatable persons in the monitored area and the net inflow rate of persons to the monitored area — S203

FIG.2

S301

Obtain a plurality of images of at least one checkpoint of a monitored area

S302

Identify a number of persons entering the monitored area and a number of persons leaving the monitored area from the plurality of images of the at least one checkpoint of the monitored area

S303

Determine a number of already-accommodated persons in the monitored area according to the number of persons entering the monitored area and the number of persons leaving the monitored area

S304

Determine an inflow rate of persons at the at least one checkpoint and an outflow rate of persons at the at least one checkpoint according to a number of persons entering the monitored area and a number of persons leaving the monitored area within a target time period

S305

Determine a net inflow rate of persons to the monitored area according to the inflow rate of persons at the at least one checkpoint and the outflow rate of persons at the at least one checkpoint

S306

Determine an overcrowding time of the monitored area according to the number of already-accommodated persons in the monitored area, the number of accommodatable persons in the monitored area and the net inflow rate of persons to the monitored area

FIG.3

S401

Obtain a plurality of images of at least one checkpoint of a monitored area

S402

Determine a number of already-accommodated persons in the monitored area and a net inflow rate of persons to the monitored area according to the plurality of images of the at least one checkpoint of the monitored area

S403

Determine a number of remaining accommodatable persons in the monitored area according to the number of already-accommodated persons in the monitored area and a number of accommodatable persons in the monitored area

S404

Determine an overcrowding time of the monitored area according to the number of remaining accommodatable persons in the monitored area and the net inflow rate of persons to the monitored area

FIG.4

Overcrowding prediction apparatus

501
Obtaining module

502
First determining module

503
Second determining module

504
Sending module

505
Third determining module

FIG.5

Processor — Memory

601 602

FIG.6

## INTERNATIONAL SEARCH REPORT

| International application No. |
| --- |
| **PCT/CN2021/098382** |

| | | |
| --- | --- | --- |
| **A.** | **CLASSIFICATION OF SUBJECT MATTER** | |
| | G06K 9/00(2006.01)i;  G07C 9/00(2020.01)i;  G06Q 10/04(2012.01)i;  G06Q 10/06(2012.01)i | |
| | According to International Patent Classification (IPC) or to both national classification and IPC | |

| | | |
| --- | --- | --- |
| **B.** | **FIELDS SEARCHED** | |
| Minimum documentation searched (classification system followed by classification symbols) | | |
| G06K G07C G06Q | | |
| Documentation searched other than minimum documentation to the extent that such documents are included in the fields searched | | |
| Electronic data base consulted during the international search (name of data base and, where practicable, search terms used) | | |
| CNABS; CNTXT; CNKI; SIPOABS; DWPI; USTXT; WOTXT; EPTXT: 人群, 过密, 密度, 预测, 景点, 客流, 人流, 速度, 区域, crowd, density, overcrowding, prediction, scenic spot, flow of passengers, stream of people, speed, rate, area | | |

| | | |
| --- | --- | --- |
| **C.** | **DOCUMENTS CONSIDERED TO BE RELEVANT** | |

| Category* | Citation of document, with indication, where appropriate, of the relevant passages | Relevant to claim No. |
| --- | --- | --- |
| PX | CN 111652161 A (SHANGHAI SHANGTANG INTELLIGENT TECHNOLOGY CO., LTD.) 11 September 2020 (2020-09-11) claims 1-10, description, paragraphs [0047]-[0137] | 1-16 |
| X | CN 105791022 A (BEIJING CE VANLINK TECHNOLOGY CO., LTD.) 20 July 2016 (2016-07-20) description, paragraphs [0004]-[0083] | 1-16 |
| A | CN 108345857 A (BEIJING TIANYUAN INNOVATION TECHNOLOGY CO., LTD.) 31 July 2018 (2018-07-31) entire document | 1-16 |
| A | US 2016261984 A1 (TELENAV INC.) 08 September 2016 (2016-09-08) entire document | 1-16 |

☐ Further documents are listed in the continuation of Box C.        ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **03 August 2021** | **19 August 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/098382**

| Patent document cited in search report | | | Publication date (day/month/year) | Patent family member(s) | | | Publication date (day/month/year) |
|---|---|---|---|---|---|---|---|
| CN | 111652161 | A | 11 September 2020 | None | | | |
| CN | 105791022 | A | 20 July 2016 | CN | 105791022 | B | 30 July 2019 |
| CN | 108345857 | A | 31 July 2018 | None | | | |
| US | 2016261984 | A1 | 08 September 2016 | US | 10623888 | B2 | 14 April 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010510936